(19) Europäisches Patentamt
European Patent Office
Office européen des brevets

(11) **EP 2 675 103 A2**

(12) **EUROPÄISCHE PATENTANMELDUNG**

(43) Veröffentlichungstag:
**18.12.2013 Patentblatt 2013/51**

(51) Int Cl.:
***H04L 9/00*** *(2006.01)*

(21) Anmeldenummer: 13002905.1

(22) Anmeldetag: **05.06.2013**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **13.06.2012 DE 102012011732
31.07.2012 DE 102012015158**

(71) Anmelder: **Giesecke & Devrient GmbH
81677 München (DE)**

(72) Erfinder:
- **Bauer, Sven, Dr.
85591 Vaterstetten (DE)**
- **Bockes, Markus, Dr.
81927 München (DE)**
- **Lamla, Michael
80638 München (DE)**

(54) **Gegen Ausspähen geschützte kryptographische Berechnung**

(57) Die Erfindung gibt ein Verfahren an, in einem Prozessor, zum Durchführen einer kryptographischen Berechnung (DES, AES) unter Verwendung eines kryptographischen Schlüssels (K), um ein Rechenergebnis (E) der Berechnung (DES, AES) zu erzielen, wobei der Schlüssel (K) und das 1er-Komplement (K') des Schlüssels für die Durchführung der Berechnung bereitgestellt werden, wobei zufallsgesteuert festgelegt wird, welcher (K; K') von dem Schlüssel (K) und dem 1er-Komplement (K') des Schlüssels für die Durchführung der Berechnung verwendet wird, die Berechnung mit dem festgelegten Schlüssel (K; K') durchgeführt wird, und das Rechenergebnis (E) erzeugt wird.

Fig. 5

EP 2 675 103 A2

**Beschreibung**

Die Erfindung betrifft ein gegen Ausspähen geschütztes Verfahren zum Durchführen einer kryptographischen Berechnung.

Kryptographische Berechnungen werden von einem Prozessor durchgeführt, z.B. von einem allgemeinen Prozessor (CPU), oder von einem Krypto-Coprozessor, der einem allgemeinen Prozessor zugeordnet ist. Der geheime Schlüssel für eine durch den Prozessor (allgemeinen Prozessor oder Krypto-Coprozessor) auszuführende Berechnung wird in einem dem Prozessor zugeordneten Schlüsselregister bereitgehalten. Insbesondere Chipkarten, z.B. für Zahlungsverkehr- oder Mobilfunkanwendungen, haben häufig Prozessoren mit Krypto-Coprozessoren.

Durch eine kryptographische Berechnung werden Eingangsdaten unter Verwendung eines geheimen Schlüssels zu Ausgangsdaten verarbeitet, z.B. Klartextdaten mit einem Schlüssel zu Chiffredaten verschlüsselt oder umgekehrt Chiffredaten mit einem Schlüssel zu Klartextdaten entschlüsselt. Beispiele für symmetrische (Verschlüsselungs-Schlüssel = Entschlüsselungs-Schlüssel) kryptographische Berechnungen sind die Algorithmen DES (Data Encryption Standard) und AES (Advanced Encryption Standard). Viele Chipkarten für Zahlungsverkehr- oder Mobilfunkanwendungen haben speziell für DES oder AES ausgelegte Krypto-Coprozessoren.

Der in einer kryptographischen Berechnung verarbeitete kryptographische Schlüssel soll geheim bleiben. Mittels DFA-Angriffen (DFA = Differential Fault Analysis) werden gezielt Fehler in die Berechnung injiziert. Aus der resultierenden Störung des Rechenergebnisses der Berechnung wird auf den Schlüssel geschlossen.

Als Gegenmaßnahme gegen DFA-Angriffe wird eine Schlüsselverifizierung durchgeführt, bei welcher der verwendete Schlüssel nach der Berechnung auf Unverändertheit verifiziert wird. Wird bei der Schlüsselverifizierung die Unverändertheit des Schlüssels bestätigt, wird das Rechenergebnis der Berechnung akzeptiert. Andernfalls wird das Rechenergebnis verworfen. Ggf. werden zusätzlich zum Verwerfen des Rechenergebnisses weitere Maßnahmen ergriffen, wie beispielsweise Sperren des Prozessors oder Co-Prozessors bzw. der Chipkarte, Löschen von Speicherbereichen oder dergleichen.

Die Schlüsselverifizierung kann z.B. durch Auslesen des Schlüssels aus dem Schlüsselregister und Vergleich des ausgelesenen Schlüssels mit einem Referenzschlüssel, der in einem anderen Speicher abgespeichert ist, geschehen. Häufig sind die Schlüsselregister, in denen der Schlüssel für die Berechnung abgelegt wird, jedoch nicht auslesbar. Bei manchen Prozessoren ist zumindest eine Prüfsumme (Checksumme) über das Schlüsselregister berechenbar. In diesem Fall kann zur Schlüsselverifizierung - vor oder/und nach der Durchführung der kryptographischen Berechnung - eine Prüfsumme über den Inhalt des Schlüsselregisters berechnet werden und mit einer vorab berechneten und abgespeicherten Referenz-Prüfsumme verglichen werden.

Eine weitere Möglichkeit zur Schlüsselverifizierung, die auch dann anwendbar ist, wenn das Schlüsselregister nicht auslesbar ist, und auch wenn keine Prüfsumme berechnet werden kann, besteht darin, eine Doppelberechnung oder Mehrfachberechnung durchzuführen. Dabei werden sicherheitskritische kryptographische Berechnungen zumindest doppelt (oder mehrfach) durchgeführt und so mehrere Instanzen des Rechergebnisses der Berechnung erzeugt. Die zwei (oder mehreren) Instanzen des Rechenergebnisses werden verglichen. Falls gemäß dem Vergleich der Verdacht einer Manipulation des Schlüssels bei einer der Durchführungen auftaucht, wird das Rechenergebnis verworfen. Optional wird zusätzlich über das jeweilige Rechenergebnis eine Prüfsumme (Checksumme) berechnet, und für den Vergleich nicht das Rechenergebnis direkt sondern die Prüfsumme über das Rechenergebnis herangezogen. Eine der Berechnungen der Doppelberechnung oder Mehrfachberechnung kann wahlweise zu einem vorgelagerten Zeitpunkt durchgeführt werden, beispielsweise bereits bei der Initialisierung oder Personalisierung eines Prozessors oder einer Chipkarte. Die Instanz des Rechenergebnisses dieser vorgelagerten Berechnung wird in diesem Fall in einem Speicher des Prozessors bzw. der Chipkarte als Referenzwert für den Vergleich der Rechenergebnisse abgelegt.

Die mehrfache Durchführung ein- und derselben Berechnung ermöglicht zwar eine Überprüfung des Rechenergebnisses, erhöht aber andererseits die Erfolgschancen eines Angreifers bei Manipulationen wie z.B. DFA-Angriffen, da er mehrere identisch ablaufende Berechnungen gezielt angreifen kann.

EP 1 569 118 B1 beschreibt eine Doppelberechnung für z.B. Speicheradressen, genauer ein Verfahren zum sicheren Berechnen eines Ergebniswerts E (z.B. einer Speicheradresse) ausgehend von einem Parameter P (z.B. einer Basis-Speicheradresse), bei dem der Ergebniswert zweimal berechnet wird, die beiden Ergebniswerte verglichen werden und der Ergebniswert nur bei zufriedenstellendem Vergleichsergebnis verwendet wird, und sonst der berechnete Ergebniswert als fehlerhaft verworfen wird. Bei den beiden Berechnungen wird einmal der Parameter P und das andere Mal der Komplementärwert ~P des Parameters verwendet.

US 2009/ 0285398 A1 beschreibt, gemäß dem Oberbegriff von Anspruch 1, ein Verfahren, in einem Prozessor, zum Durchführen einer kryptographischen Berechnung unter Verwendung eines kryptographischen Schlüssels, um ein Rechenergebnis der Berechnung zu erzielen, wobei der Schlüssel und das 1er-Komplement des Schlüssels für die Durchführung der Berechnung bereitgestellt werden. Genauer beschreibt US 2009/0285398 A1 ein Verfahren zur Verifizierung der Integrität eines Schlüssels eines symmetrischen kryptographischen Algorithmus wie beispielsweise DES (Data Encryption Standard). Hierbei wird der Algorithmus zweimal ausgeführt, einmal mit einem kryptographischen Schlüssel, und einmal mit dem 1er-Komplement des Schlüssels. Der Schlüssel K und das 1er Komplement K' des Schlüssels werden dabei in unterschiedlichen Registern bereitgehalten. Das Ergebnis C der Berechnung mit dem Schlüssel K wird 1er komplementiert und mit dem Ergebnis C' der Berechnung mit dem 1er Komplement K' verglichen. Da die beiden Durchführungen von DES nicht mehr identisch sind, reagieren sie unterschiedlich auf Manipulationen. Somit werden auch Manipulationen erkannt, die bei jeder Durchführung der Berechnung dasselbe Schlüsselregisterbit in derselben Weise angreifen.

Eine Spezialform von DFA-Angriffen bilden die Safe Error Angriffe, bei denen ein Angreifer gezielt nacheinander einzelne Schlüsselbits eines in einem Schlüsselregister für eine Berechnung abgelegten Schlüssels manipuliert und aus der resultierenden Beeinflussung des Rechenergebnisses den Schlüssel Bit für Bit rekonstruiert. Als Störung kann beispielsweise ein gezielter Lichtblitz oder Strompuls an einem gezielt ausgewählten Ort auf dem Chip, in dem der Prozessor bzw. das Schlüsselregister implementiert ist, vorgesehen sein. Der Schlüssel liegt in Binärform vor, d.h. als Abfolge von Bits mit Wert 1 oder 0. Der Angreifer führt, um den Wert eines einzelnen Schlüsselbits zu ermitteln, zwei Berechnungen durch, eine ungestörte, und eine, bei der das einzelne Schlüsselbit selektiv gestört wird, und vergleicht die Rechenergebnisse von ungestörter und gestörter Berechnung. Der Angreifer kann, je nach Details des rechnenden Prozessors, entweder wissen oder selbst festlegen, in welche Richtung gestörte Bits kippen, nach 1 oder nach 0, also auf welchen Wert, 1 oder 0, durch eine Störung Bits gesetzt werden. Führt das Stören eines Bits beispielsweise dazu, dass sich bei dem Bit der Wert Null einstellt, und die Rechenergebnisse von ungestörter und gestörter Berechnung sind gleich, dann hatte das ungestörte Bit von vornherein bereits den Wert Null. Der ausgespähte Bitwert ist Null. Unterscheiden sich dagegen die Rechenergebnisse von ungestörter und gestörter Berechnung, so wurde im ungestörten Fall mit Bitwert Eins gerechnet, im gestörten Fall mit Bitwert Null, und das ungestörte Bit hatte den Wert Eins. Der ausgespähte Bitwert ist Eins.

Teilweise wurden Safe Error Mehrfach-Angriffe erfolgreich durchgeführt, bei denen mittels eines einzigen Angriffs mehrere Schlüsselbits eines Schlüssels gleichzeitig manipuliert wurden, beispielsweise gleichzeitig gezielt auf Null gesetzt wurden. Die Gleichzeitigkeit der Manipulationen der mehreren Schlüsselbits ist dahingehend zu verstehen, dass die mehreren manipulierten Schlüsselbits in ein und dieselbe Durchführung einer kryptographischen Berechnung einfließen, und nicht etwa in aufeinanderfolgende Durchführungen der Berechnung.

Der Erfindung liegt die Aufgabe zu Grunde, ein gegen Safe Error Angriffe geschütztes Verfahren zum Durchführen einer kryptographischen Berechnung zu schaffen.

Die Aufgabe wird gelöst durch ein Verfahren nach Anspruch 1 oder 9. Vorteilhafte Ausgestaltungen der Erfindung sind in den abhängigen Ansprüchen angegeben.

Das Verfahren nach Anspruch 1, gemäß einer ersten Variante der Erfindung, wird in einem Prozessor durchgeführt, z.B. einem allgemeinen Prozessor (CPU) oder einem Krypto-Coprozessor, der wiederum einem allgemeinen Prozessor (CPU) zugeordnet sein kann. Das Verfahren ist zum Durchführen einer kryptographischen Berechnung (z.B. DES oder eines anderen Algorithmus) unter Verwendung eines kryptographischen Schlüssels, um ein Rechenergebnis der Berechnung zu erzielen, eingerichtet.

Das Verfahren zeichnet sich dadurch aus, dass zufallsgesteuert entweder der Schlüssel oder das 1er-Komplement des Schlüssels als Rechenschlüssel zur Verwendung in der Berechnung festgelegt wird, die Berechnung mit dem festgelegten Rechenschlüssel durchgeführt wird und das Rechenergebnis erzeugt wird. Mit dem festgelegten Rechenschlüssel, d.h. entweder mit dem Schlüssel oder mit dem 1er Komplement des Schlüssels, wird die Berechnung durchgeführt, so dass das Rechenergebnis erzeugt wird. Wird mit dem 1er Komplement des Schlüssels gerechnet, müssen z.B. bei DES zusätzlich die im Algorithmus zu verarbeitenden Eingangsdaten (bei Verschlüsselung Klartext, bei Entschlüsselung Chiffretext) komplementiert werden, und nach der Berechnung muss die Ausgabe des Algorithmus (bei Verschlüsselung Chiffretext, bei Entschlüsselung Klartext) komplementiert werden, um das Rechenergebnis zu erzielen. Wird mit dem Schlüssel gerechnet, erfolgt vorzugsweise ein der Komplementbildung in Bezug auf Seitenkanaleffekte gleichwertiger Rechenschritt, da sonst ein Angreifer an Hand des Vorhandenseins oder Fehlens der nachgeschalteten Komplementbildung erkennen könnte, ob mit dem Schlüssel oder dem 1er Komplement gerechnet wurde.

Ein Angreifer, der einen Safe Error Angriff auf ein ausgewähltes Bit des Schlüssels durchführt, lässt den Prozessor nacheinander zweimal die Berechnung durchführen, einmal ungestört, einmal mit Stören des Bits. Abhängig davon, ob sich die beiden Rechenergebnisse von ungestörter und gestörter Berechnung unterscheiden oder nicht, weiß der Angreifer, welchen Wert das angegriffene Bit hatte. Allerdings weiß der Angreifer nicht, dass er evtl. nicht den Schlüssel, sondern das 1er Komplement des Schlüssels angegriffen hat. In ungefähr der Hälfte der Fälle hat er ein Bit des Schlüssels ausgespäht und liegt richtig, in ungefähr der Hälfte der Fälle hat er dagegen ein Bit des 1er Komplements ausgespäht und liegt mit seiner Annahme, er habe ein Bit des Schlüssels ausgespäht, falsch. Die Fehlererkennungsrate liegt also bei ungefähr 50 Prozent. Sie liegt umso genauer bei 50 Prozent, je öfter gerechnet wird. Dies entspricht einem reinen Raten des Bitwerts. Selbst wenn der Angreifer weiß oder ahnt, dass teilweise mit dem 1er Komplement gerechnet wird, weiß er nicht, wann mit dem Schlüssel und wann mit dem 1er Komplement gerechnet wird. Somit kann er nur raten, ob der ausgespähte Bitwert zum Schlüssel oder zum 1er Komplement gehört. Der ausgespähte Bitwert ist wertlos. Beim nächsten angegriffenen Bit kann der Angreifer wieder nur raten. Somit kann er nicht auf die richtige Abfolge der Bits innerhalb des Schlüssels schließen. Der Angreifer kann somit aus dem Safe Error Angriff, d.h. aus dem Bitkippen und Beobachten der Reaktion des Rechenergebnisses auf das Bitkippen, keine Rückschlüsse auf den Schlüssel ziehen.

Daher ist gemäß Anspruch 1 ein gegen Safe Error Angriffe geschütztes Verfahren zum Durchführen einer kryptographischen Berechnung geschaffen.

Wahlweise wird zumindest der festgelegte Rechenschlüssel von dem Schlüssel und dem 1er-Komplement nach der Durchführung der Berechnung geprüft und in Abhängigkeit vom Ergebnis des Prüfens das Rechenergebnis akzeptiert oder verworfen. Wahlweise werden der Schlüssel und das 1er Komplement des Schlüssels nach der Durchführung der Berechnung geprüft, also optional Schlüssel und 1er-Komplement, zumindest aber der verwendete Rechenschlüssel. Hierdurch wird die Verwendung eines durch Störung verfälschten Rechenergebnisses verhindert. Für das Prüfen des Schlüssels  gibt es mehrere Möglichkeiten, die alternativ oder kumulativ eingesetzt werden können. Wahlweise wird nur der Schlüssel, mit dem gerechnet wurde, geprüft. Wahlweise werden stets der Schlüssel und das 1er Komplement des Schlüssels geprüft.

Wahlweise wird der Rechenschlüssel durch Auslesen des Rechenschlüssels und Vergleich mit einem Referenzwert für den Rechenschlüssel geprüft bzw. werden der Schlüssel und das 1er Komplement des Schlüssels durch Auslesen des Schlüssels bzw. des 1er Komplements und Vergleich mit einem Referenzwert für den Schlüssel bzw. einem Referenzwert für das 1er Komplement geprüft. Dies ist nur möglich, falls der Rechenschlüssel, Schlüssel bzw. das 1er Komplement des Schlüssels auslesbar ist. Der Referenzwert ist beispielsweise in einem nichtflüchtigen Speicher sicher abgespeichert. Wahlweise wurde der Referenzwert an einem früheren Zeitpunkt abgespeichert, beispielsweise während eines Initialisierungs- oder Personalisierungsschritts des Prozessors oder einer Chipkarte, in welche der Prozessor implementiert ist.

Wahlweise wird der Rechenschlüssel durch Berechnen einer Prüfsumme über den Rechenschlüssel und Vergleich mit einem Referenzwert für die Prüfsumme geprüft. Ggf. werden der Schlüssel und das 1er Komplement des Schlüssels durch Berechnen einer Prüfsumme (Checksum) über den Schlüssel bzw. das 1er Komplement und Vergleich mit einem Referenzwert für die Prüfsumme geprüft. Der Referenzwert für die Prüfsumme ist beispielsweise in einem nichtflüchtigen Speicher sicher abgespeichert. Wahlweise wurde der Referenzwert an einem zeitlich vorgelagerten Zeitpunkt berechnet und abgespeichert, beispielsweise während eines Initialisierungs- oder Personalisierungsschritts des Prozessors oder einer Chipkarte, in welche der Prozessor implementiert ist. Alternativ wird der Referenzwert für die Prüfsumme  unmittelbar vor der Durchführung der kryptographischen Berechnung und Berechnung der Prüfsumme berechnet.

Wahlweise wird der Rechenschlüssel durch Mehrfachberechnung, dabei zumindest Doppelberechnung, geprüft, wobei für die Mehrfachberechnung: die Durchführung der Berechnung mit dem festgelegten Rechenschlüssel als erste Durchführung durchgeführt wird, wobei eine erste Instanz des Rechenergebnisses erzeugt wird, und zusätzlich mindestens eine weitere Durchführung der Berechnung durchgeführt wird, vorzugsweise mit dem festgelegten Rechenschlüssel oder alternativ mit dem Schlüssel oder dem 1er-Komplement, wobei mindestens eine weitere Instanz des Rechenergebnisses erzeugt wird. Die erste Instanz und mindestens eine weitere Instanz werden miteinander verglichen. Aus dem Ergebnis des Vergleichens wird das Ergebnis des Prüfens abgeleitet. Ggf. werden der Schlüssel und das 1er Komplement des Schlüssels durch Mehrfach- insbesondere Doppelberechnung geprüft. Sind erste Instanz und weitere (z.B. zweite) Instanz gleich (und gleich dem Rechenergebnis), wird das Rechenergebnis akzeptiert. Unterscheiden sich erste Instanz und weitere Instanz, wird das Rechenergebnis verworfen, da vermutlich bei einer Durchführung innerhalb der Mehrfachberechnung (z.B. Doppelberechnung) eine Manipulation erfolgt ist.

Beim DES wird beispielsweise eine einzelne Berechnung mit entweder dem Schlüssel oder dem 1er Komplementärschlüssel durchgeführt und nachfolgend für die Doppelberechnung eine weitere Berechnung durchgeführt, die wahlweise, z.B. ebenfalls zufallsgesteuert, mit dem Schlüssel oder dem 1er Komplementärschlüssel durchgeführt wird, oder mit demselben Schlüssel wie die erste Berechnung.

Beim DES kann aus dem Ergebnis einer Berechnung mit dem 1er Komplement des Schlüssel durch Komplementbildung das Ergebnis der Berechnung mit dem Schlüssel erzeugt werden. Daher kann beim DES bei der Prüfung des Schlüssels mittels Doppelberechnung einmal mit dem Schlüssel und einmal mit dem 1er Komplement de Schlüssels gerechnet werden, und die Ergebnisse werden verglichen. Beim AES lässt sich aus dem Ergebnis einer Berechnung mit dem komplementierten Schlüssel nicht das Ergebnis einer Berechnung mit dem un-komplementierten Schlüssel gewinnen. Daher lässt sich ein Rechenergebnis aus einer Berechnung mit dem Schlüssel nur mit einem Rechenergebnis einer anderen Berechnung mit dem Schlüssel vergleichen. Somit wird bei AES zur Prüfung des Schlüssels mittels Doppelberechnung zweimal mit demselben Schlüssel (komplementiert oder nicht komplementiert) gerechnet. Varianten der Erfindung, bei denen Ergebnisse aus Berechnungen mit dem Schlüssel zu vergleichen sein können mit Ergebnissen aus Berechnungen mit dem 1er Komplement des Schlüssels sind daher für DES geeignet, für AES dagegen nicht.

Gemäß einer ersten Ausführungsform, insbesondere zur ersten Variante, der Erfindung sind dem Prozessor ein erstes Schlüsselregister und ein zweites Schlüsselregister zugeordnet. Dabei wird der Schlüssel im ersten Schlüsselregister abgelegt und das 1er-Komplement des Schlüssels im zweiten Schlüsselregister abgelegt. Bei der ersten Ausführungsform wird der Rechenschlüssel dadurch zufallsgesteuert festgelegt, dass zufallsgesteuert entweder das erste Schlüsselregister oder das zweite Schlüsselregister für die Durchführung der Berechnung festgelegt wird. Mit dem Schlüssel aus dem Schlüsselregister wird die Berechnung dann durchgeführt. Ein Angriff, der gezielt ein bestimmtes Bit des ersten Schlüsselregisters angreift, ist bei einer Durchführung der Berechnung erfolgreich, die auf das erste Schlüsselregister zugreift. Wird für eine Durchführung der Berechnung auf das zweite Schlüsselregister zugegriffen, ist der Angriff wirkungslos. Da der Angreifer nie wissen kann, welches der beiden Schlüsselregister zur Durchführung der Berechnung herangezogen wird, kann er auch nicht wissen, ob sich das Rechenergebnis nicht ändert, weil das angegriffene Bit einen bestimmten Wert hatte, oder weil das falsche Schlüsselregister angegriffen wurde. Somit bietet das erfindungsgemäße Verfahren gemäß der ersten Ausführungsform, mit zwei Schlüsselregistern, von denen zufallsgesteuert eines verwendet wird, einen guten Schutz gegen Safe Error Angriffe.

Gemäß einer zweiten Ausführungsform, insbesondere zur ersten Variante, der Erfindung sind dem Prozessor ein erstes Schlüsselregister und ein zweites Schlüsselregister zugeordnet, und der Rechenschlüssel wird dadurch zufallsgesteuert festgelegt, dass zufallsgesteuert entweder der Schlüssel oder das 1er-Komplement des Schlüssels im ersten Schlüsselregister abgelegt wird und der andere Schlüssel von dem Schlüssel und dem 1er-Komplement des Schlüssels im zweiten Schlüsselregister abgelegt wird, und dass ein vorbestimmtes Schlüsselregister, entweder das erste Schlüsselregister oder das zweite Schlüsselregister zur Verwendung in der Berechnung festgelegt wird. Mit dem Schlüssel aus dem Schlüsselregister wird die Berechnung dann durchgeführt.

Wahlweise werden der Schlüssel und das 1er Komplement des Schlüssels nach der Durchführung der Berechnung geprüft, indem die Inhalte des ersten Schlüsselregisters und des zweiten Schlüsselregisters nach der Durchführung der Berechnung geprüft werden. Die Prüfung der Inhalte der Schlüsselregister kann wiederum durch Auslesen des Schlüsselregisters, Prüfsummenbildung über den Inhalt des Schlüsselregisters oder Doppelberechnung erfolgen, wie weiter oben analog für die Schlüsselprüfung, unabhängig vom Vorliegen von Schlüsselregistern, beschrieben.

Gemäß Anspruch 9 wird eine zweite Variante eines erfindungsgemäßen Verfahrens angegeben. Das Verfahren ist zum Durchführen einer kryptographischen Berechnung in einem Prozessor eingerichtet, unter Verwendung eines kryptographischen Schlüssels, um ein Rechenergebnis der Berechnung zu erzielen. Bei dem Verfahren werden zwei Durchführungen der Berechnung durchgeführt, so dass eine erste Instanz und eine zweite Instanz des Rechenergebnisses erzeugt werden, wobei für eine erste Durchführung von den zwei Durchführungen der Schlüssel als Rechenschlüssel verwendet wird und für eine zweite Durchführung von den zwei Durchführungen das 1er-Komplement als Rechenschlüssel verwendet wird. Das Verfahren gemäß der zweiten Variante zeichnet sich dadurch aus, dass für die erste und die zweite Durchführung der Berechnung zufallsgesteuert festgelegt wird, für welche Durchführung von der ersten und zweiten Durchführung der Schlüssel und für welche das 1er-Komplement des Schlüssels als Rechenschlüssel verwendet wird. Bei der zweiten Variante werden somit (mindestens) zwei Durchführungen der Berechnung durchgeführt, dabei notwendig eine mit dem Schlüssel und eine mit dem 1er Komplementärschlüssel. Da zufallsgesteuert festgelegt wird, für welche Durchführung von der ersten und zweiten Durchführung der Schlüssel und für welche das 1er-Komplement des Schlüssels verwendet wird, weiß ein Angreifer nicht, bei welcher Durchführung mit welchem Schlüssel, dem Schlüssel selbst oder seinem 1er Komplement, gerechnet wird. Somit weiß er nicht, ob ausgespähte Daten zum Schlüssel oder zum 1er Komplement gehören und kann nicht auf den Schlüssel rückschließen.

Der Grundgedanke des Verfahrens nach Anspruch 9 ist derselbe wie der des Verfahrens nach Anspruch 1, nämlich zufallsgesteuert mit entweder dem Schlüssel oder dem 1er-Komplement des Schlüssels zu rechnen, um Safe Error Angriffe, die auf Bitkippen beruhen, zu verhindern. Gemäß Anspruch 1 wird nur eine einzige Berechnung durchgeführt. (Ggf. wird zwar zur Schlüsselprüfung mittels Mehrfachberechnung mindestens eine weitere Berechnung durchgeführt, nicht aber zur Gewinnung des Rechenergebnisses.) Hierdurch wird, falls zufallsgesteuert das 1er-Komplement als Rechenschlüssel festgelegt wird, aus einer Berechnung mit dem 1er-Komplement ein Rechenergebnis erzeugt. Hierdurch ist das Verfahren nach Anspruch 1 für DES gut geeignet, für AES hingegen ungeeignet, da bei AES aus einer Berechnung mit dem 1er-Komplement nicht das Rechenergebnis der Berechnung mit dem Schlüssel gewonnen werden kann.

Das Verfahren nach Anspruch 9 ist hingegen neben DES auch für AES gut geeignet. Denn da stets zwei Berechnungen durchgeführt werden, einmal mit dem Schlüssel und einmal mit dem 1er-Komplement, wird stets eine Berechnung mit dem Schlüssel als Rechenschlüssel durchgeführt, aus der auch für AES das Rechenergebnis gewonnen werden kann.

Wahlweise wird diejenige Instanz des Rechenergebnisses, die durch Durchführung der Berechnung mit dem Schlüssel erzeugt wird, als Rechenergebnis verwendet. Diese Ausführungsform ist insbesondere für den AES bevorzugt. Beim DES kann das Rechenergebnis wahlweise aus der Durchführung der Berechnung mit dem Schlüssel oder aus der Durchführung der Berechnung mit dem 1er Komplementärschlüssel verwendet werden, ggf. mit zusätzlicher Komplementbildung nach der Berechnung.

Verglichen mit z.B. dem Verfahren aus US 2009/0285398 A1, bei dem zwar Schlüssel und 1er Komplement verwendet werden, aber in vorhersehbarer Weise, bietet die erfindungsgemäße zufallsgesteuerte Auswahl zwischen Schlüssel und 1er Komplement sogar gegen Safe Error Angriffe Schutz. Wahlweise wird jeder verwendete Rechenschlüssel geprüft - insbesondere durch Auslesen, Prüfsummenbildung oder Mehrfachberechnung -, und in Abhängigkeit vom Ergebnis des Prüfens das Rechenergebnis akzeptiert oder verworfen.

Bei Schlüsselprüfung durch Mehrfach-/Doppelberechnung beim AES wird die weitere/zweite Berechnung der Mehrfach-/Doppelberechnung mit demselben Schlüssel durchgeführt wie die erste Berechnung, so dass die mehreren/ beiden Instanzen des Rechenergebnisses verglichen werden können.

Bei Schlüsselprüfung durch Mehrfachberechnung beim DES können von den mehreren Berechnungen innerhalb der Mehrfachberechnungen manche mit dem Schlüssel und manche mit dem 1er-Komplement durchgeführt werden, alternativ alle mit demselben Rechenschlüssel.

Bei einem Verfahren nach Anspruch 9, bei dem zwei Berechnungen durchgeführt werden, je einmal mit dem Schlüssel und dem 1er-Komplement, und bei dem zusätzlich eine Schlüsselprüfung durch Doppelberechnung durchgeführt wird, werden somit insgesamt vier Durchführungen der Berechnung ausgeführt.

Das Verfahren gemäß der zweiten Variante nach Anspruch 9 ist auch dann anwendbar, wenn nur ein einziges Schlüsselregister zur Verfügung steht, das nacheinander einmal mit dem Schlüssel und einmal mit dem 1er-Komplement des Schlüssels belegt wird, in zufallsgesteuerter Reihenfolge. Mit dem Schlüssel aus dem Schlüsselregister als Rechenschlüssel wird die Berechnung nacheinander zweimal durchgeführt, und somit in zufallsgesteuerter Reihenfolge einmal mit dem Schlüssel und einmal mit dem 1er-Komplement.

Stehen zwei Schlüsselregister zur Verfügung, ein erstes und ein zweites, können Schlüssel und 1er Komplement in zwei Schlüsselregister abgelegt werden.

Wahlweise wird der Schlüssel in einem vorbestimmten von dem ersten und zweiten Schlüsselregister abgelegt wird und das 1er-Komplement des Schlüssels im anderen von dem ersten und zweiten Schlüsselregister) abgelegt. Dabei wird zufallsgesteuert festgelegt, für welche Durchführung von der ersten und zweiten Durchführung das erste Schlüsselregister und für welche das zweite Schlüsselregister zur Verwendung in der Berechnung festgelegt wird. Mit dem zufallsgesteuert festgelegten Schlüsselregister wird die Berechnung durchgeführt. Hierbei wird der Zufall durch die zufällige Auswahl der Schlüsselregister für die Berechnung in die Berechnung gebracht. Die Belegung der Schlüsselregister kann vorherbestimmt erfolgen.

Alternativ erfolgt die Belegung des ersten und zweiten Schlüsselregisters zufallsgesteuert. D.h. zufallsgesteuert wird entweder der Schlüssel oder das 1er-Komplement des Schlüssels im ersten Schlüsselregister abgelegt und der andere Schlüssel von dem Schlüssel und dem 1er-Komplement des Schlüssels im zweiten Schlüsselregister abgelegt. Dabei wird ein vorbestimmtes Schlüsselregister, entweder das erste Schlüsselregister oder das zweite Schlüsselregister zur Verwendung in der Berechnung festgelegt wird und mit dem festgelegten Schlüsselregister die Berechnung durchgeführt. Hierbei wird der Zufall durch die Belegung der Schlüsselregister in die Berechnung gebracht.

In beiden Fällen werden sequenziell zwei Berechnungen durchgeführt, einmal mit dem Schlüssel und einmal mit dem 1er Komplement, wobei zufallsgesteuert ist, bei welcher Durchführung welcher Schlüssel, Schlüssel selbst oder 1er Komplement, verwendet wird. Der Zufall wird entweder durch die Belegung oder die Auswahl für die Berechnung der beiden Schlüsselregister in die Berechnung eingebracht.

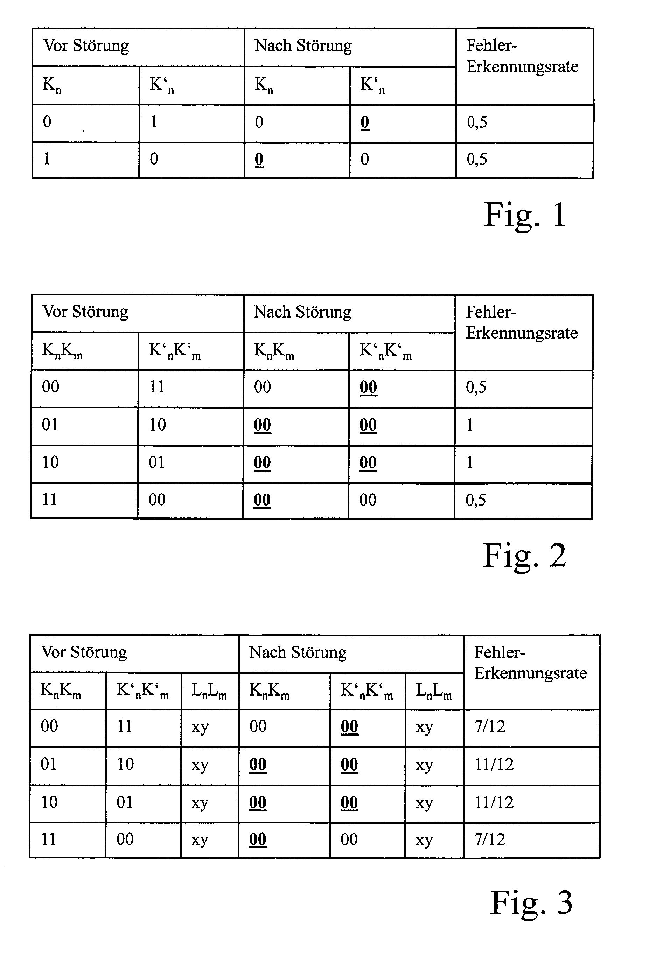

Das erfindungsgemäße Verfahren bietet Schutz gegen Safe Error Angriffe auf ein einzelnes Schlüsselbit. Die nachfolgend angegebene Weiterbildung des erfindungsgemäßen Verfahrens ist zusätzlich gegen Safe Error Mehrfach- Angriffe geschützt, wobei mit einem einzigen Angriff mehrere Schlüsselbits eines zur Berechnung bereitgestellten Schlüssels gleichzeitig manipuliert werden. Stört ein Angreifer zwei Schlüsselbits gleichzeitig, hängt die Fehlererkennungsrate davon ab, ob die beiden Schlüsselbits gleich oder unterschiedlich sind, wie weiter unten an Hand von Fig. 2 im Detail nachgewiesen ist. Somit ist an Hand der Fehlererkennungsrate erkennbar, ob die beiden Schlüsselbits gleich oder unterschiedlich sind. Indem der Angreifer jeweils zwei benachbarte Schlüsselbits gleichzeitig angreift, zuerst das nullte und erste, dann das erste und zweite, dann das zweite und dritte gleichzeitig, usw., arbeitet er sich Schlüsselbit-Paar- weise durch den Schlüssel und kann Bit für Bit den gesamten Schlüssel ermitteln.

Gemäß einer Weiterbildung der Erfindung wird weiter zumindest ein Leerschlüssel, vorzugsweise eine Mehrzahl von Leerschlüsseln, bereitgestellt, der oder die vom Schlüssel und vom 1er-Komplement unterschiedlich ist bzw. sind, wobei weiter zumindest eine Durchführung der Berechnung mit zumindest einem Leerschlüssel durchgeführt wird, zusätzlich zur Berechnung mit K oder K'. Dabei wird beim zufallsgesteuerten Festlegen nach Anspruch 9 zufallsgesteuert festgelegt, für welche Durchführung von der ersten, zweiten und mindestens einen weiteren Durchführung der Schlüssel, für welche das 1er-Komplement des Schlüssels, und für welche der zumindest eine Leerschlüssel als Rechenschlüssel verwendet wird. Als Leerschlüssel ist dabei ein vom Schlüssel und vom 1er Komplementärschlüssel unterschiedlicher Schlüssel vorgesehen. Beispiele von Leerschlüsseln sind: Zufallsschlüssel, d.h. eine Zufallsfolge von Schlüsselbits, d.h. Nullen und Einsen in zufälligem Muster; Schachbrettmuster-Schlüssel, d.h. Schlüssel mit abwechseln Einsen und Nullen als Schlüsselbits (01010101...); der Schlüssel mit Wert 00; der Schlüssel mit Wert hexadezimal FF; Rotationen des Schlüssels K. Das Rechenergebnis unter Verwendung des Leerschlüssels liefert nicht das angestrebte Rechenergebnis der Berechnung. Somit stellt jede Durchführung einer Berechnung mit einem Leerschlüssel lediglich eine Dummy- Berechnung dar, die kein verwendbares Rechenergebnis erzeugt.

Durch das Einstreuen zumindest einer, vorzugsweise mehrerer, solchen Dummy-Berechnung mit zumindest einem Leerschlüssel wird die Unterschiedlichkeit der Fehlererkennungsraten, je nachdem, ob zwei gleichzeitig gestörte Bits des gerade verwendeten Schlüssels gleich oder unterschiedlich sind, verringert, wie weiter unten an Hand von Fig. 3 im Detail nachgewiesen ist. Je größer die Anzahl r von zwischen die Berechnungen mit Schlüssel oder 1er Komplement des Schlüssels gestreuten Dummy-Berechnungen mit Leerschlüsseln ist, umso mehr gleichen sich die Fehlererkennungsraten der beiden Fälle "zwei gleichzeitig gestörte Schlüsselbits sind gleich" und "zwei gleichzeitig gestörte Schlüsselbits sind unterschiedlich" aneinander an. Somit ist durch das Einstreuen zumindest einer Dummy-Berechnung mit zumindest einem Leerschlüssel eine Schlüsselausspähung selbst bei Angriffen, bei denen zwei Schlüsselbits gleichzeitig manipuliert werden, stark erschwert oder sogar verhindert.

Bei der Weiterbildung wird somit eine Mehrzahl von Durchführungen der Berechnung durchgeführt, wobei die Berechnung in zufallsgesteuerter Reihenfolge mit dem Schlüssel, dem 1er Komplement und dem zumindest einen Leerschlüssel, vorzugsweise mehreren Leerschlüsseln, als Rechenschlüssel durchgeführt wird. Wahlweise werden alle verwendeten Rechenschlüssel geprüft, wahlweise durch Auslesen, Prüfsummenbildung, Mehrfachberechnung (insbesondere Doppelberechnung).

Im Folgenden wird die Erfindung an Hand von Ausführungsbeispielen und unter Bezugnahme auf die Zeichnung näher erläutert, in der zeigen:

Fig.1    eine Fehlererkennungstabelle für Bitkippen auf Null an einem einzelnen Schlüsselbit, für Schlüssel und 1er Komplement;

Fig.2    eine Fehlererkennungstabelle für gleichzeitiges Bitkippen auf Null an zwei Schlüsselbits, für Schlüssel und 1er Komplement;

Fig.3    eine Fehlererkennungstabelle für gleichzeitiges Bitkippen auf Null an zwei Schlüsselbits, für Schlüssel, 1er Komplement und Leerschlüssel;

Fig.4    eine Schlüsselfestlegung gemäß einer ersten Ausführungsform der Erfindung, mit zwei Schlüsselregistern;

Fig.5    eine Schlüsselfestlegung gemäß einer zweiten Ausführungsform der Erfindung, mit nur einem Schlüsselregister.

Fig.1 zeigt eine Fehlererkennungstabelle für einen Safe Error Angriff, bei dem durch eine Störung ein Bitkippen auf Null an einem einzelnen Schlüsselbit bewirkt, bei Berechnung mit zufallsgesteuert entweder einem Schlüssel K oder dem 1er Komplement K' des Schlüssels K. Der Schlüssel K besteht aus einer Schlüsselbitfolge <K1K2...Kn...K1>. Der Komplementärschlüssel K' aus einer Schlüsselbitfolge <K'1K'2...K'n...K'1>. Durch die Störung wird ein einzelnes Schlüsselbit n des (Komplementär-) Schlüssels K bzw. K' auf Kn = Null gesetzt, unabhängig vom Wert Kn, den das Schlüsselbit vorher hatte.

Die Fehlererkennungstabelle aus Fig.1 zeigt in der ersten Spalte die möglichen Werte Kn des Schlüsselbits n des Schlüssels K vor der Störung an. In der zweiten Spalte sind die entsprechenden Werte K'n des Schlüsselbits n des 1er Komplements K' des Schlüssels vor der Störung angezeigt. Spalte drei zeigt zu den Werten aus Spalte eins die Werte von Kn nach der Störung. Spalte vier zeigt zu den Werten aus Spalte zwei die Werte von K'n nach der Störung. In Spalten drei und vier sind gestörte Schlüsselbits, bei denen sich das Rechenergebnis bei einer Durchführung einer kryptographischen Berechnung mit dem gestörten Schlüssel gegenüber einer Durchführung der Berechnung mit dem ungestörten Schlüssel ändert, fett unterstrichen markiert. Schlüsselbits, bei denen sich das Rechenergebnis zwischen Berechnung mit ungestörtem und gestörtem Schlüssel nicht ändert, sind in normaler Schrifttype dargestellt. In der letzten Spalte fünf ist die Fehlererkennungsrate für das jeweilige Schlüsselbit Kn in Spalte eins angegeben, definiert als die relative (auf Eins normierte) Häufigkeit, mit der, bei einer sehr großen Anzahl von Durchführungen der Berechnung, ein Angreifer sieht, dass sich das Rechenergebnis auf Grund seiner Störung ändert.

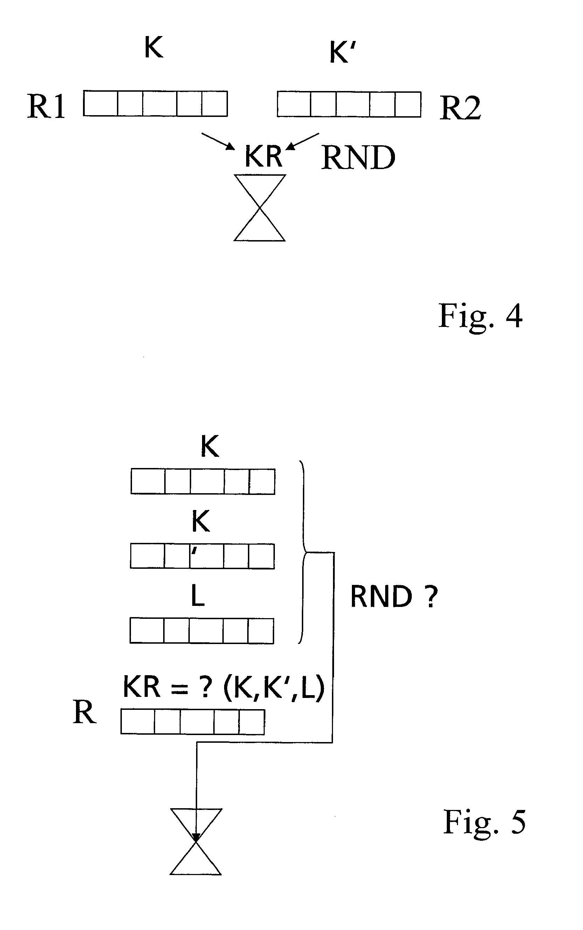

Beim in Fig.1 betrachteten Angriff wird der gerade betrachtete Schlüssel, d.h. Schlüssel K oder 1er Komplement K', in einem Schlüsselregister bereitgehalten. Entweder sind, wie in Fig. 4 gezeigt, zwei Schlüsselregister vorhanden und wird ein Schlüsselregister für die Durchführung der Berechnung festgesetzt. Alternativ ist, wie in Fig. 5 dargestellt, nur ein einziges Schlüsselregister vorhanden, in welches entweder der Schlüssel K oder das 1er-Komplement geladen wird.

Nachdem K oder K' als zu verwendender Schlüssel festgelegt ist, wird eine kryptographische Berechnung mit dem festgelegten Schlüssel durchgeführt. Bei Kn=0 und einer Berechnung mit K bewirkt die Störung kein Bitkippen, da das Schlüsselbit Kn bereits den Wert Null hat. Somit ändert sich das Rechenergebnis durch die Störung nicht. Die Berechnung erzeugt ein fehlerfreies Rechenergebnis. Bei Kn=0 und einer Berechnung mit K' bewirkt die Störung Bitkippen auf Null, da das Schlüsselbit K'n zuvor den Wert Eins hatte. Die Berechnung erzeugt ein fehlerhaftes Rechenergebnis. Bei zufallsgesteuerter Auswahl von K oder K' und einer großen Anzahl von Durchführungen der Berechnung wird in statistisch der Hälfte der Fälle durch die Störung ein Bitkippen bewirkt und somit ein Fehler im Rechenergebnis erzeugt. Somit beträgt die Fehlererkennungsrate ½ (0,5). Dasselbe gilt für Kn=1, da dann K'n=0 ist. Die Fälle Kn=0 und Kn=1 liefern an den Angreifer, der das einzelne Bit n angreift dasselbe, ununterscheidbare Ergebnis. Somit kann der Angreifer Kn=0 und Kn=1 nicht voneinander unterscheiden.

Fig. 2 zeigt eine Fehlererkennungstabelle für einen Safe Error Angriff, der ein gleichzeitiges Bitkippen auf Null an zwei Schlüsselbits umfasst, bei Durchführung der Berechnung mit zufallsgesteuert einem Schlüssel K oder dem 1er Komplement K' des Schlüssels K. K besteht aus einer Schlüsselbitfolge <K1K2...KnKm...K1>, K' aus einer Schlüsselbitfolge <K'1K'2...K'nK'm...K'1>. Beim betrachteten Angriff wird der gerade betrachtete Schlüssel, d.h. Schlüssel K oder 1er Komplement K', in einem Schlüsselregister bereitgehalten. Durch eine Störung werden die beiden Schlüsselbits n, m von K bzw. K' auf Null gesetzt, unabhängig vom Wert, den die Schlüsselbits vorher hatten. Die Fehlererkennungstabelle zeigt in der ersten Spalte die möglichen Werte KnKm des Schlüsselbit-Paars n,m des Schlüssels K vor der Störung an. In der zweiten Spalte sind die entsprechenden Werte K'nK'm des Schlüsselbit-Paars n,m des 1er Komplements des Schlüssels K' vor der Störung angezeigt.

Spalte drei zeigt zu den Werten aus Spalte eins die Werte von KnKm nach der Störung. Spalte vier zeigt zu den Werten aus Spalte zwei die Werte von K'nK'm nach der Störung. In Spalten drei und vier sind gestörte Schlüsselbit-Paare, bei denen sich das Rechenergebnis bei einer Durchführung einer kryptographischen Berechnung mit dem gestörten Schlüssel gegenüber einer Durchführung der Berechung mit dem ungestörten Schlüssel ändert, fett unterstrichen markiert. Schlüsselbit-Paare, bei denen sich das Rechenergebnis zwischen Berechnung mit gestörtem und ungestörtem Schlüssel nicht ändert, sind in normaler Schrifttype angegeben. In der letzten Spalte fünf ist die Fehlererkennungsrate für die jeweilige Schlüsselbitkombination KnKm in Spalte eins angegeben, also die relative Häufigkeit, mit der ein Angreifer sieht, dass sich das Rechenergebnis auf Grund seiner Störung ändert, wieder für eine sehr große Anzahl von Durchführungen der Berechnung und zufallsgesteuerte Festsetzung von K oder K' als Schlüssel für die Berechnung.

Sind in der Tabelle aus Fig. 2 die Schlüsselbits KnKm=00, haben also beide den gleichen Wert Null, bleiben die Schlüsselbits KnKm des Schlüssels K bei Störung unverändert Null, der Angreifer erhält nach der Störung der Berechnung mit dem Schlüssel K ein fehlerfreies Rechenergebnis. Das 1er Komplement von KnKm=00 ist K'nK'm=11 (Spalte 2) und wird durch die Störung geändert auf K'nK'm=00 (Spalte 4). Entsprechend liefert eine Durchführung der Berechnung mit dem gestörten Schlüsselbit-Paar K'nK'm=00 (Spalte 4) im 1er-Komplementärschlüssel ein fehlerhaftes Rechenergebnis. In statistisch der Hälfte der Fälle bekommt der Angreifer nach der Störung ein fehlerhaftes Rechenergebnis. Die Schlüsselbitkombination KnKm=00 liefert somit eine Fehlererkennungsrate von 0,5. Die Situation ist analog für KnKm=11. Dann werden durch die Störung die beiden Schlüsselbits n,m im Schlüssel K auf KnKm=00 gekippt. Im 1er Komplement K' bleiben die Schlüsselbits n,m unverändert. Berechnung mit K liefert nach der Störung ein fehlerhaftes Rechenergebnis, Berechnung mit K' ein fehlerfreies Rechenergebnis. Die Fehlererkennungsrate ist ebenfalls 0,5. Die Fehlererkennungsrate ist also, wenn die Schlüsselbits Kn und Km gleich sind, gleich 0,5.

Ist in der Tabelle aus Fig. 2 eines der Schlüsselbits Kn, Km Null, das andere Eins (KnKm=01 oder KnKm=10), enthält sowohl der Schlüssel K als auch der 1er-Komplementärschlüssel K' im Schlüsselbit-Paar n,m eine Eins, die durch die Störung auf Null gekippt wird. In beiden Fällen KnKm=01, KnKm=10 wird also sowohl bei Berechnung mit dem Schlüssel als auch bei Berechnung mit dem 1er-Komplementärschlüssel K' bei Verwendung eines gestörten Schlüssels bzw. 1er-Komplementärschlüssels ein fehlerhaftes Rechenergebnis erzeugt. Die Fehlererkennungsrate beträgt eins. Die Fehlererkennungsrate ist also, wenn die Schlüsselbits Kn und Km unterschiedlich sind, stets eins.

Die Fehlererkennungsrate ist somit im Fall, dass zwei gleichzeitig gestörte Schlüsselbits den gleichen Wert haben, unterschiedlich von der Fehlererkennungsrate im Fall, dass zwei gleichzeitig gestörte Schlüsselbits unterschiedliche Werte haben. Der Angreifer beginnt in einem ersten Schritt z.B. mit dem Schlüsselbitpaar K1K2 und ermittelt an Hand der Fehlererkennungsrate, ob K1 und K2 gleich oder unterschiedlich sind. Beispielsweise gleich, somit 00 oder 11, Annahme 00. In einem zweiten Schritt ermittelt der Angreifer, ob K2 und K3 unterschiedlich oder gleich sind, beispielsweise unterschiedlich, somit (mit der obigen Annahme K1K2=00) eins, d.h. K1K2K3=001. In einem dritten Schritt ermittelt der Angreifer ob K3 und K4 unterschiedlich oder gleich sind, beispielsweise gleich. Somit ist K4=K3=1, und K1K2K3K4=0011. Sukzessive ermittelt der Angreifer so den vollständigen Schlüssel K = K1K2K3K4...KnKm...K1. War die Annahme in Schritt eins falsch, dann war nicht K1K2=00, sondern K'1K'2=00 und der Angreifer hat den Komplementärschlüssel K' ermittelt. Die Bitfolge K1K2K3... ist aber richtig ermittelt worden, nur ggf. komplementiert.

Fig. 3 zeigt eine Fehlererkennungstabelle für einen gleichzeitigen Angriff auf zwei Schlüsselbits n, m, bei Berechnung mit zufallsgesteuert entweder Schlüssel K, 1er Komplement K' oder einem einzigen Leerschlüssel L. Im Vergleich zur Situation aus Fig. 2 werden zwischen die Durchführungen der Berechnungen mit dem Schlüssel K und dem 1er-Komplementärschlüssel K' zusätzlich Dummy-Durchführungen der Berechnung mit Leerschlüsseln gestreut.

In einem Zufallsschlüssel L haben zwei benachbarte Bits LnLm einen der Werte 00, 01,10,11. Im Fall LnLm = 00 führt die Störung mit Bitkippen auf Null zu keiner Veränderung des Rechenergebnisses bei Verwendung des gestörten Schlüssels. In den drei anderen Fällen LnLm = 01, 10 oder 11 führt die Störung mit Bitkippen auf Null zur Veränderung des Rechenergebnisses bei Verwendung des gestörten Schlüssels. Somit ist die Fehlererkennungsrate für einen Zufallsschlüssel L gleich ¾ (dreiviertel).

Die Fehlererkennungsraten einer kryptographischen Berechnung, bei der zufallsgesteuert ein Schlüssel K, das 1er Komplement K' des Schlüssels K oder einer von r Leerschlüsseln L1, ..., Lr als Schlüssel verwendet wird sind folgende. Fig. 3 zeigt den Spezialfall nur eines Leerschlüssels, d.h. r=1.

Die Fehlererkennungsraten für einen Schlüssel K und den Komplementärschlüssel K' dazu sind einmal Null und einmal Eins, falls die beiden Schlüsselbits n,m gleich sind, vgl. Fig. 2 und Text dazu. Falls die beiden Schlüsselbits n,m unterschiedlich sind, ist die Fehlererkennungsrate immer Eins, vgl. Fig. 2 und Text dazu.

Haben die beiden angegriffenen Schlüsselbits KnKm den gleichen Wert, ist die gesamte Fehlererkennungsrate bei Rechnen mit zufallsgesteuert Schlüssel K, 1er Komplement K' oder einem von r Leerschlüsseln L1, ..., Lr gleich der Summe der relativen Häufigkeiten für K, K', L1, ..., Lr, also:

$$FR(n=m) = 0/(r+2) + 1/(r+2) + 3/4^* \, r/(r+2) = (3r+4)/(4r+8).$$

Für r=1 gemäß Fig. 3 ergibt dies die Fehlererkennungsrate 7/12.

Haben die beiden angegriffenen Schlüsselbits KnKm unterschiedliche Werte, ist die gesamte Fehlererkennungsrate bei Rechnen mit zufallsgesteuert Schlüssel K, 1er Komplement K' oder einem von r Leerschlüsseln L1, ..., Lr gleich:

$$FR(n/=m) = 1/(r+2) + 1/(r+2) + 3/4^* \, r/(r+2) = (3r+8)/(4r+8).$$

Für r=1 gemäß Fig. 3 ergibt dies die Fehlererkennungsrate 11/12.

Werden für die Durchführung einer Berechnung zusätzlich zum Schlüssel K und dem 1er Komplement K' r Leerschlüssel L1, ... Lr vorgesehen und zufallsgesteuert verwendet, gleichen sich die Fehlererkennungsraten für die beiden Fälle, dass zwei gleichzeitig angegriffene Schlüsselbits gleich bzw. unterschiedlich sind, mit zunehmender Anzahl r von Leerschlüsseln immer mehr aneinander an, und an 3/4.

In der Praxis werden die Fehlererkennungsraten durch physikalische Messungen mit inhärenter Messgenauigkeit d ermittelt. Die in den Tabellen angegebenen Fehlererkennungsraten schwanken somit um d. Folglich sind in der Praxis die Fälle gleicher und ungleicher Schlüsselbit-Paare bereits mit einer endlichen Anzahl r von Leerschlüsseln nicht mehr unterscheidbar.

Fig. 4 zeigt eine Schlüsselfestlegung gemäß einer ersten Ausführungsform der Erfindung. Einem Prozessor, der eine kryptographische Berechnung durchführen soll, sind zwei Schlüsselregister R1, R2 zugeordnet. Das erste Schlüsselregister R1 wird mit einem Schlüssel K belegt, z.B. 10110100, das zweite Schlüsselregister R2 wird mit dem 1er Komplement K' des Schlüssel K belegt, also 01001011. Zufallsgesteuert ("RND") wird entweder das erste Schlüsselregister R1 oder das zweite Schlüsselregister R2 als für die Berechnung zu verwendendes Register festgelegt und der Inhalt des festgelegten Schlüsselregisters dem Prozessor zur Durchführung der Berechnung zugeführt. Alternativ wird die Belegung der Schlüsselregister R1, R2 zufallsgesteuert vorgenommen.

Fig. 5 zeigt eine Schlüsselfestlegung gemäß einer zweiten Ausführungsform der Erfindung, umfassend eine Weiterbildung der Erfindung. Einem Prozessor, der eine kryptographische Berechnung durchführen soll, ist ein einzelnes Schlüsselregister R zugeordnet. Zumindest ein Schlüssel K, optional auch das 1er Komplement K' des Schlüssels K und/oder ein Leerschlüssel L (z.B. ein Zufallsschlüssel etc.) werden in einem Speicher bereitgehalten. Leerschlüssel L und/oder 1er Komplement K' können optional auch erst unmittelbar vor der Durchführung der Berechnung erzeugt werden. Zufallsgesteuert wird das Schlüsselregister R entweder mit dem Schlüssel K, dem 1er Komplement K' des Schlüssels K oder dem Leerschlüssel L belegt und der Inhalt des Schlüsselregisters dem Prozessor zur Durchführung der Berechnung zugeführt. Die zweite Variante kann auch ohne die Weiterbildung eingesetzt werden. In diesem Fall ist in Fig. 5 der Leerschlüssel L wegzulassen.

**Patentansprüche**

1. Verfahren, in einem Prozessor, zum Durchführen einer kryptographischen Berechnung (DES) unter Verwendung eines kryptographischen Schlüssels (K), um ein Rechenergebnis (E) der Berechnung (DES) zu erzielen, **dadurch gekennzeichnet, dass** zufallsgesteuert entweder der Schlüssel (K) oder das 1er-Komplement (K') des Schlüssels (K) als Rechenschlüssel (KR) zur Verwendung in der Berechnung festgelegt wird, die Berechnung mit dem festgelegten Rechenschlüssel (KR) durchgeführt wird und das Rechenergebnis (E) erzeugt wird.

2. Verfahren nach Anspruch 1, wobei zumindest der festgelegte Rechenschlüssel (KR) von dem Schlüssel (K) und dem 1er-Komplement (K') nach der Durchführung der Berechnung geprüft wird und in Abhängigkeit vom Ergebnis des Prüfens das Rechenergebnis (E) akzeptiert oder verworfen wird.

3. Verfahren nach Anspruch 2, wobei der Rechenschlüssel (KR) durch Auslesen des Rechenschlüssels (KR) und Vergleich mit einem Referenzwert für den Rechenschlüssel (RK) geprüft wird.

4. Verfahren nach Anspruch 2 oder 3, wobei der Rechenschlüssel (KR) durch Berechnen einer Prüfsumme über den Rechenschlüssel (KR) und Vergleich mit einem Referenzwert für die Prüfsumme geprüft wird.

5. Verfahren nach einem der Ansprüche 2 bis 4, wobei der Rechenschlüssel (KR) durch Mehrfachberechnung, dabei zumindest Doppelberechnung, geprüft wird, wobei für die Mehrfachberechnung:

   - die Durchführung der Berechnung mit dem festgelegten Rechenschlüssel (KR) als erste Durchführung durchgeführt wird, wobei eine erste Instanz (E1) des Rechenergebnisses (E) erzeugt wird,
   - und zusätzlich mindestens eine weitere Durchführung der Berechnung durchgeführt wird, vorzugsweise mit dem festgelegten Rechenschlüssel (KR) oder alternativ mit dem Schlüssel (K) oder dem 1er-Komplement (K'), wobei mindestens eine weitere Instanz (E2, ... ) des Rechenergebnisses (E) erzeugt wird,
   - und die erste Instanz (E1) und mindestens eine weitere Instanz (E2, ... ) miteinander verglichen werden,
   - und wobei aus dem Ergebnis des Vergleichens das Ergebnis des Prüfens abgeleitet wird.

6. Verfahren nach einem der Ansprüche 1 bis 5, wobei dem Prozessor ein erstes Schlüsselregister (R1) und ein zweites Schlüsselregister (R2) zugeordnet sind, wobei der Schlüssel (K) im ersten Schlüsselregister (R1) abgelegt wird und das 1er-Komplement (K') des Schlüssels im zweiten Schlüsselregister (R2) abgelegt wird, und wobei der Rechenschlüssel (KR) dadurch festgelegt wird, dass zufallsgesteuert entweder das erste Schlüsselregister (R1) oder das zweite Schlüsselregister (R2) für die Durchführung der Berechnung festgelegt wird.

7. Verfahren nach einem der Ansprüche 1 bis 5, wobei dem Prozessor ein erstes Schlüsselregister (R1) und ein zweites Schlüsselregister (R2) zugeordnet sind, und wobei der Rechenschlüssel (KR) dadurch zufallsgesteuert festgelegt wird, dass zufallsgesteuert entweder der Schlüssel (K) oder das 1er-Komplement (K') des Schlüssels (K) im ersten Schlüsselregister (R1) abgelegt wird und der andere Schlüssel von dem Schlüssel (K) und dem 1er-Komplement (K') des Schlüssels (K) im zweiten Schlüsselregister (R2) abgelegt wird, und dass ein vorbestimmtes Schlüsselregister, entweder das erste Schlüsselregister (R1) oder das zweite Schlüsselregister (R2) zur Verwendung in der Berechnung festgelegt wird.

8. Verfahren nach Anspruch 6 oder 7, wobei der Schlüssel (K) und das 1er Komplement (K') des Schlüssels nach der Durchführung der Berechnung geprüft werden, indem die Inhalte des ersten Schlüsselregisters (R1) und des zweiten Schlüsselregisters (R2) nach der Durchführung der Berechnung geprüft werden, insbesondere durch Auslesen, Prüfsummenbildung oder Mehrfachberechnung geprüft wird.

9. Verfahren, in einem Prozessor, zum Durchführen einer kryptographischen Berechnung (DES, AES) unter Verwendung eines kryptographischen Schlüssels (K), um ein Rechenergebnis (E) der Berechnung (DES, AES) zu erzielen, wobei zwei Durchführungen der Berechnung durchgeführt werden, so dass eine erste Instanz (E1) und eine zweite Instanz (E2) des Rechenergebnisses (E) erzeugt werden, wobei für eine erste Durchführung von den zwei Durchführungen der Schlüssel (K) als Rechenschlüssel (KR) verwendet wird und für eine zweite Durchführung von den zwei Durchführungen das 1er-Komplement (K') als Rechenschlüssel (KR) verwendet wird,
**dadurch gekennzeichnet, dass**
für die erste und die zweite Durchführung der Berechnung zufallsgesteuert festgelegt wird, für welche Durchführung von der ersten und zweiten Durchführung der Schlüssel (K) und für welche das 1er-Komplement (K') des Schlüssels (K) als Rechenschlüssel (KR) verwendet wird.

10. Verfahren nach Anspruch 9, wobei jeder verwendete Rechenschlüssel (KR) geprüft wird - insbesondere durch Auslesen, Prüfsummenbildung oder Mehrfachberechnung -, und in Abhängigkeit vom Ergebnis des Prüfens das Rechenergebnis (E) akzeptiert oder verworfen wird.

11. Verfahren nach Anspruch 9 oder 10, wobei diejenige Instanz (E1 oder E2), die durch Durchführung der Berechnung mit dem Schlüssel (K) erzeugt wird, als Rechenergebnis (E) verwendet wird.

12. Verfahren nach einem der Ansprüche 9 bis 11, wobei dem Prozessor (P) ein Schlüsselregister (R) zugeordnet ist, das in zufallsgesteuerter Reihenfolge nacheinander mit dem Schlüssel (K) und dem 1er-Komplement (K') des Schlüssels (K) belegt wird und als Schlüsselregister (R) für die Berechnung festgelegt wird.

13. Verfahren nach einem der Ansprüche 9 bis 11, wobei dem Prozessor ein erstes Schlüsselregister (R1) und ein zweites Schlüsselregister (R2) zugeordnet sind, wobei der Schlüssel (K) in einem vorbestimmten (R1; R2) von dem ersten und zweiten Schlüsselregister (R1, R2) abgelegt wird und das 1er-Komplement (K') des Schlüssels im anderen (R2; R1) von dem ersten und zweiten Schlüsselregister (R1, R2) abgelegt wird, und wobei zufallsgesteuert festgelegt wird, für welche Durchführung von der ersten und zweiten Durchführung das erste Schlüsselregister (R1) und für welche das zweite Schlüsselregister (R2) zur Verwendung in der Berechnung festgelegt wird.

14. Verfahren nach einem der Ansprüche 9 bis 11, wobei dem Prozessor ein erstes Schlüsselregister (R1) und ein zweites Schlüsselregister (R2) zugeordnet sind, und wobei zufallsgesteuert entweder der Schlüssel (K) oder das 1er-Komplement (K') des Schlüssels (K) im ersten Schlüsselregister (R1) abgelegt wird und der andere Schlüssel von dem Schlüssel (K) und dem 1er-Komplement (K') des Schlüssels (K) im zweiten Schlüsselregister (R2) abgelegt wird, und wobei ein vorbestimmtes Schlüsselregister, entweder das erste Schlüsselregister (R1) oder das zweite Schlüsselregister (R2) zur Verwendung in der Berechnung festgelegt wird.

15. Verfahren nach einem der Ansprüche 1 bis 14, wobei weiter zumindest ein Leerschlüssel, vorzugsweise eine Mehrzahl von Leerschlüsseln (L1, ..., Lr), bereitgestellt wird, der oder die vom Schlüssel (K) und vom 1er-Komplement (K') unterschiedlich ist bzw. sind, und wobei weiter zumindest eine weitere Durchführung der Berechnung durchgeführt wird, und wobei beim zufallsgesteuerten Festlegen nach Anspruch 9 zufallsgesteuert festgelegt wird, für welche Durchführung von der ersten, zweiten und mindestens einen weiteren Durchführung der Schlüssel (K), für welche das 1er-Komplement (K') des Schlüssels (K), und für welche der zumindest eine Leerschlüssel (L1, ..., Lr) als Rechenschlüssel (KR) verwendet wird.

| Vor Störung | | Nach Störung | | Fehler-Erkennungsrate |
|---|---|---|---|---|
| $K_n$ | $K'_n$ | $K_n$ | $K'_n$ | |
| 0 | 1 | 0 | **0** | 0,5 |
| 1 | 0 | **0** | 0 | 0,5 |

Fig. 1

| Vor Störung | | Nach Störung | | Fehler-Erkennungsrate |
|---|---|---|---|---|
| $K_n K_m$ | $K'_n K'_m$ | $K_n K_m$ | $K'_n K'_m$ | |
| 00 | 11 | 00 | **00** | 0,5 |
| 01 | 10 | **00** | **00** | 1 |
| 10 | 01 | **00** | **00** | 1 |
| 11 | 00 | **00** | 00 | 0,5 |

Fig. 2

| Vor Störung | | | Nach Störung | | | Fehler-Erkennungsrate |
|---|---|---|---|---|---|---|
| $K_n K_m$ | $K'_n K'_m$ | $L_n L_m$ | $K_n K_m$ | $K'_n K'_m$ | $L_n L_m$ | |
| 00 | 11 | xy | 00 | **00** | xy | 7/12 |
| 01 | 10 | xy | **00** | **00** | xy | 11/12 |
| 10 | 01 | xy | **00** | **00** | xy | 11/12 |
| 11 | 00 | xy | **00** | 00 | xy | 7/12 |

Fig. 3

Fig. 4

KR = ? (K,K',L)

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1569118 B1

- US 20090285398 A1